# EUROPÄISCHE PATENTSCHRIFT

(11) **EP 2 132 070 B1**
(45) Veröffentlichungstag und Bekanntmachung des Hinweises auf die Patenterteilung: **06.07.2016**
(21) Anmeldenummer: 08716369.7
(22) Anmeldetag: 07.03.2008
(51) Int. Cl.: B60T 17/00

(54) **DRUCKLUFTVERSORGUNGSEINRICHTUNG UND VENTILGEHÄUSE**
COMPRESSED-AIR SUPPLY DEVICE AND VALVE HOUSING
DISPOSITIF D'ALIMENTATION EN AIR COMPRIMÉ ET BOÎTIER DE SOUPAPE

(30) Priorität: 08.03.2007 DE 102007011246
(43) Veröffentlichungstag der Anmeldung: 16.12.2009
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2008/001856
(87) Internationale Veröffentlichungsnummer: WO 2008/107208

(56) Entgegenhaltungen:
- WO-A-2004/103509
- DE-A1- 3 133 112
- DE-A1- 3 606 817
- GB-A- 2 201 356
- US-A- 5 286 283

## Beschreibung

Die Erfindung betrifft eine Druckluftversorgungseinrichtung für ein Nutzfahrzeug, mit einem Ventilgehäuse und einer wechselbaren Lufttrocknerpatrone, wobei
- die Lufttrocknerpatrone eine Filtereinrichtung aufweist, die aus dem Ventilgehäuse in die Lufttrocknerpatrone strömende Luft reinigt,
- die Filtereinrichtung einen dem Ventilgehäuse zugewandten Vorfilterbereich von einem der Lufttrocknerpatrone zugewandten Nachfilterbereich, in dem sich von der Filtereinrichtung erfasste Fremdpartikel sammeln, trennt und
- parallel zu der Filtereinrichtung ein Rückschlagventil vorgesehen ist, das eine Luftströmung von dem Vorfilterbereich in den Nachfilterbereich unterbindet und eine Luftströmung von dem Nachfilterbereich in den Vorfilterbereich zulässt.

Die Erfindung betrifft weiterhin ein Ventilgehäuse für eine Druckluftversorgungseinrichtung mit einer wechselbaren Lufttrocknerpatrone, wobei
- die Lufttrocknerpatrone eine Filtereinrichtung aufweist, die aus dem Ventilgehäuse in die Lufttrocknerpatrone strömende Luft reinigt,
- die Filtereinrichtung einen dem Ventilgehäuse zugewandten Vorfilterbereich von einem der Lufttrocknerpatrone zugewandten Nachfilterbereich, in dem sich von der Filtereinrichtung erfasste Fremdpartikel sammeln, trennt und
- parallel zu der Filtereinrichtung ein Rückschlagventil vorgesehen ist, das eine Luftströmung von dem Vorfilterbereich in den Nachfilterbereich unterbindet und eine Luftströmung von dem Nachfilterbereich in den Vorfilterbereich zulässt.

Derartige Druckluftversorgungseinrichtungen mit Ventilgehäuse und Luftrocknerpatrone werden verwendet, um Druckluftverbraucher eines Nutzfahrzeugs mit trockener und gereinigter Luft zu versorgen. Als Druckluftverbraucher kommen beispielsweise das Bremssystem oder eine Luftfederanlage in Betracht. Die Trocknung der Luft erfolgt dabei durch ein meist als Granulat vorliegendes Trockenmittel. Weiterhin ist es nützlich, Fremdstoffe aus der Druckluft zu entfernen, beispielsweise Kompressoröl. Dieses Öl wird der Druckluftversorgungseinrichtung zusammen mit der Luft in teilweise dampfförmigem Aggregatszustand zugeführt, und es liegt aufgrund der hohen Temperaturen und der hohen Drücke in mehrfach gecrackter Form vor. Die somit vorliegenden Substanzen sind für die Bauteile einer Druckluftanlage schädlich. Beispielsweise setzen gecrackte Öle die Lebensdauer von Dichtelementen stark herab.

WO 2004/103509 A offenbart eine Druckluftversorgungseinrichtung für ein Nutzfahrzeug mit einem Ventilgehäuse und einer Lufttrocknerpatrone.

Ein Beispiel für eine Druckluftversorgungseinrichtung, bei der diese Fremdstoffe aus der zugeführten Druckluft entfernt werden, ist in der DE 103 29 401 A1 offenbart. Hier ist ein Koaleszenzfilter vorgesehen, der die in die Filterpatrone einströmende Druckluft reinigt, wobei sich die der Luft entnommenen Fremdpartikel in einem Nachfilterbereich ansammeln. Um in der Lage zu sein, den Nachfilterbereich von Zeit zu Zeit zu entleeren, ist parallel zu dem Koaleszenzfilter ein Rückschlagventil vorgesehen. Dieses erlaubt durch Öffnen eines Ablassventils im Ventilgehäuse ein Abströmen der Fremdpartikel sowie deren Ausstoß in die Atmosphäre.

Das Rückschlagventil kommt somit intensiv mit den gesammelten Fremdpartikeln in Berührung, was es erforderlich macht, das Rückschlagventil aus vergleichsweise teuren Materialien zu fertigen. Dies wäre in Anbetracht der Gesamtkosten einer Druckluftversorgungseinrichtung an sich zu verkraften. Problemtisch ist jedoch, dass die Lufttrocknerpatrone von Zeit zu Zeit ausgetauscht werden muss. Folglich schlägt sich die Darstellung des Rückschlagventils aus teurem Material nicht nur auf die Anschaffungskosten der Druckluftversorgungseinrichtung nieder, sondern insbesondere auch auf die Kosten der austauschfähigen Trocknerpatrone. Bezüglich der Gesamtkosten der Lufttrocknerpatrone stellen die Kosten für das Rückschlagventil aber keinen vernachlässigbaren Anteil mehr dar.

Der Erfindung liegt die Aufgabe zugrunde, eine Druckluftversorgungseinrichtung zur Verfügung zu stellen, so dass die mit dem Austausch der Lufttrocknerpatrone verbundenen Kosten reduziert werden.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass das Rückschlagventil in dem Ventilgehäuse angeordnet ist. Das Rückschlagventil bleibt auf diese Weise auch bei Patronenwechsel erhalten. Es trägt damit nicht zu den Kosten bei, die beim Austausch der Filterpatrone entstehen.

Nützlicherweise ist vorgesehen, dass der Nachfilterbereich einen Sammelkanal für von der Filtereinrichtung erfasste Fremdpartikel aufweist, wobei mindestens ein Abschnitt des Sammelkanals im eingebauten ungeneigten Zustand der Druckluftversorgungseinrichtung eine horizontale Ebene definiert, und dass das Rückschlagventil unterhalb der Ebene liegt. Hierdurch wird sichergestellt, dass zumindest bei wagerecht stehendem Nutzfahrzeug eine vollständige Entleerung des Sammelkanals über das Rückschlagventil erfolgen kann.

In diesem Zusammenhang ist es besonders nützlich, dass das Rückschlagventil bei einer Neigung der Druckluftversorgungseinrichtung von bis zu 15 Grad bezüglich der horizontalen Ebene um eine beliebige Achse auf einer niedrigeren Vertikalkoordinate liegt als der niedrigste Punkt des mindestens einen die horizontale Ebene definierenden Abschnittes des Sammelkanals. Der Sammelkanal wird auf diese Weise auch dann entleert, wenn sich das Nutzfahrzeug in Schiefstellung befindet, beispielsweise bei einer Bergfahrt.

Die Erfindung ist in besonders nützlicher Weise dadurch weitergebildet, dass die Lufttrocknerpatrone ein eine Trockenmittelbox aufnehmendes Patronengehäuse aufweist und dass das Patronengehäuse mit dem Ventilgehäuse direkt über eine Dichtung verbunden ist. Derartige Druckluftversorgungseinrichtungen werden auch als offene Systeme bezeichnet. Insbesondere ist die Lufttrocknerpatrone nicht mit einem Fußflansch ausgestattet, über den geschlossene Systeme mit dem Ventilgehäuse verbunden sind. Für offene Systeme eignet sich die Erfindung in besonderer Weise, da ein Spülkanal zum Überführen der im Sammelkanal der Trocknerpatrone angesammelten Fremdstoffe in das Ventilgehäuse ohne Hindernis realisiert werden kann, das heißt insbesondere ohne eine Umgehung oder eine Durchbohrung eines Fußflansches.

Die Erfindung baut auf dem gattungsgemäßen Ventilgehäuse dadurch auf, dass das Rückschlagventil in dem Ventilgehäuse angeordnet ist.

Die Erfindung wird nun mit Bezug auf die begleitenden Zeichnungen anhand einer besonders bevorzugten Ausführungsform beispielhaft erläutert.

Es zeigen:
- Figur 1: eine perspektivische Schnittansicht einer erfindungsgemäßen Druckluftversorgungseinrichtung und
- Figur 2: eine schematische Darstellung der Schnittstelle zwischen einer Lufttrocknerpatrone und einem Ventilgehäuse einer erfindungsgemäßen Druckluftversorgungseinrichtung.

Bei der nachfolgenden Beschreibung der Zeichnungen bezeichnen gleiche Bezugszeichen gleiche oder vergleichbare Komponenten.

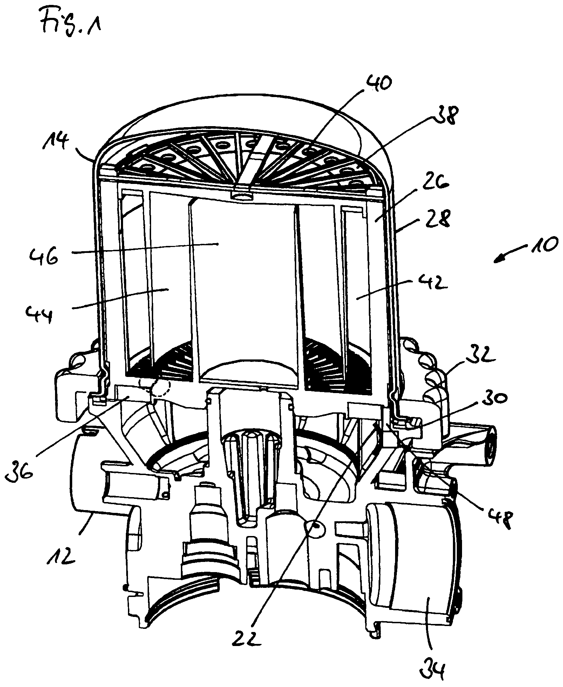

Figur 1 zeigt eine perspektivische Schnittansicht einer erfindungsgemäßen Druckluftversorgungseinrichtung. Die dargestellte Druckluftversorgungseinrichtung 10 umfasst ein Ventilgehäuse 12 und eine Lufttrocknerpatrone 14. Die Lufttrocknerpatrone 14 beziehungsweise ein Gehäuse 28 der Lufttrocknerpatrone 14 steht über eine Dichtung 30 direkt mit dem Ventilgehäuse 12 in Verbindung. Insbesondere ist die Lufttrocknerpatrone 14 nicht mit einem Fußflansch ausgestattet, der die Lufttrocknerpatrone 14 in Richtung Ventilgehäuse begrenzt. Von einem Bajonettring 32 wird die auf die Dichtung 30 wirkende abdichtende Kraft zur Verfügung gestellt. Innerhalb des Gehäuses 28 der Lufttrocknerpatrone 14 ist eine Trockenmittelbox 26 angeordnet.

Beim Einsatz der Druckluftversorgungseinrichtung 10 strömt Druckluft durch einen Eingang 34 des Ventilgehäuses 12 in dieses ein. Die Druckluft wird durch einen Vorfilter 36 geleitet, um nachfolgend in einem Zwischenraum zwischen der Außenseiten der Trockenmittelbox 26 und der Innenseite des Gehäuses 28 in einen Freiraum 38 oberhalb der Trockenmittelbox einzuströmen. In der Oberseite der Trockenmittelbox sind eine Vielzahl von Öffnungen 40 vorgesehen, die den Freiraum 38 oberhalb der Trockenmittelbox mit deren Innerem verbinden. Insbesondere strömt die Druckluft aus dem Freiraum 38 über die Öffnungen 40 und einen ersten Labyrinthbereich 42 der Trockenmittelbox in den unteren Bereich der Trockenmittelbox 26, wo die Luft dann umgelenkt wird, um in einen zweiten Labyrinthbereich 44 einzuströmen. Dort nach oben geleitet wird die Druckluft im oberen Bereich wiederum umgelenkt, um dann durch einen zentralen Labyrinthbereich 46 wieder nach unten in Richtung Ventilgehäuse 12 zu strömen. Die getrocknete Druckluft steht somit in den Luftführungen des Ventilgehäuses zur Verfügung, so dass sie von dort den Druckluftverbrauchern zugeführt werden kann. Die Trockenmittelbox 26 ist zum Zwecke der Trocknung der Druckluft mit Granulat gefüllt. Der Vorfilter 36 dient der Reinigung der Druckluft im Hinblick auf gröbere Verschmutzungen. Eine weitere Filtereinrichtung, die in Figur 1 nicht dargestellt ist, ist dem Vorfilter 36 in Strömungsrichtung der Druckluft nachgelagert, um die Druckluft dann auch noch von weiteren Verschmutzungen zu befreien, insbesondere von Öl und dergleichen. Das Öl sammelt sich im Bereich der Lufttrocknerpatrone in einem in Figur 1 nicht dargestellten Sammelkanal an. Von dort kann es bei geeigneten Druckverhältnissen in der Druckluftversorgungseinrichtung über einen Spülkanal 48 und ein Rückschlagventil 22 in das Ventilgehäuse und von dort zu einem Ablass abströmen. Das Rückschlagventil 22 ist vorteilhafterweise als Membranventil ausgelegt, wobei die Membran aus einem Material gefertigt sein sollte, dass den chemischen Belastungen der abzustoßenden Fremdstoffe über einen langen Zeitraum standhält.

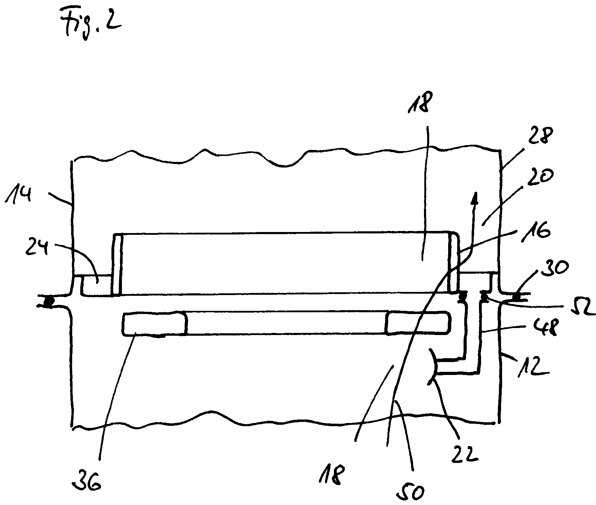

Figur 2 zeigt eine schematische Darstellung der Schnittstelle zwischen einer Lufttrocknerpatrone und einem Ventilgehäuse einer erfindungsgemäßen Druckluftversorgungseinrichtung. Hier ist die Anordnung der an der Reinigung der Druckluft sowie dem Ausstoß der fremdpartikelbeteiligten Komponenten schematisch dargestellt. Die Druckluft 50 durchströmt zunächst den Vorfilter 36, um dann im Anschluss die Filtereinrichtung 16 zu durchströmen. Die Filtereinrichtung 16 ist vorzugsweise als Koaleszenzfilter ausgelegt, wobei sich die durch den Koaleszenzfilter 16 abgeschiedenen Fremdpartikel in Strömungsrichtung hinter dem Koaleszenzfilter 16 in einem Sammelkanal 24 ansammeln. Im Rahmen der vorliegenden Beschreibung wird der gesamte Bereich, der sich in Strömungsrichtung der Druckluft vor der Filtereinrichtung 16 befindet, als Vorfilterbereich bezeichnet, während der Bereich hinter der Filtereinrichtung 16 als Nachfilterbereich 20 bezeichnet wird. In dem Ventilgehäuse 12 ist ein Spülkanal 48 vorgesehen, der über eine Dichtung mit dem Sammelkanal 24 in Verbindung steht. Das Ende des Spülkanals 48 wird durch ein Rückschlagventil 22 abgedichtet. Dieses verschließt den Spülkanal 48 während der Druckluftförderphase, bei der der Druck im Vorfilterbereich 18 den Druck im Nachfilterbereich 20 in der Regel übersteigt. Wird jedoch ein Ablassventil geöffnet, was zum Druckabfall im Vorfilterbereich 18 führt, so übersteigt der Druck im Nachfilterbereich 20 den Druck im Vorfilterbereich 18. Folglich öffnet das Rückschlagventil 22, wodurch die im Sammelkanal 24 angesammelten Fremdpartikel über das Rückschlagventil 22 ausgestoßen werden. Der Spülkanal 48 kann vollständig im Ventilgehäuse angeordnet sein, wobei der Spülkanal 48 an den Sammelkanal 24 über eine Dichtung 52 anschließt. Ebenfalls kann vorgesehen sein, dass ein Teil des Spülkanals innerhalb der Lufttrocknerpatrone 14 vorgesehen ist. Wesentlich ist lediglich, dass eine druckdichte Verbindung zwischen dem Sammelkanal 24 und dem Ventilgehäuse zur Verfügung gestellt wird, so dass bei entsprechenden Druckverhältnissen der beschriebene Ausstoß von Fremdpartikeln stattfinden kann. Dies ist bei offenen Systemen leicht realisierbar, da ein die Trocknerpatrone abdichtender Fußflansch nicht vorhanden ist und somit bei der Gestaltung unberücksichtigt bleiben kann.

Nützlicherweise ist das Rückschlagventil 22 deutlich niedriger angeordnet als der Sammelkanal 24. Auf diese Weise ist auch eine Schiefstellung der Druckluftversorgungseinrichtung erlaubt, ohne dass hierdurch eine vollständige Entleerung des Sammelkanals 24 ausgeschlossen wäre. Insbesondere sollten Neigungen des Fahrzeugs von bis zu 15 Grad eine vollständige Entleerung des Sammelkanals 24 noch nicht behindern.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Druckluftversorgungseinrichtung
- 12: Ventilgehäuse
- 14: Lufttrocknerpatrone
- 16: Filtereinrichtung
- 18: Vorfilterbereich
- 20: Nachfilterbereich
- 22: Rückschlagventil
- 24: Sammelkanal
- 26: Trockenmittelbox
- 28: Gehäuse
- 30: Dichtung
- 32: Bajonettring
- 34: Eingang
- 36: Vorfilter
- 38: Freiraum
- 40: Öffnungen
- 42: Labyrinthbereich
- 44: Labyrinthbereich
- 46: Labyrinthbereich
- 48: Spülkanal
- 50: Druckluft
- 52: Dichtung

## Patentansprüche

1. Druckluftversorgungseinrichtung (10) für ein Nutzfahrzeug, mit einem Ventilgehäuse (12) und einer wechselbaren Lufttrocknerpatrone (14), wobei
- die Lufttrocknerpatrone (14) eine Filtereinrichtung (16) aufweist, die aus dem Ventilgehäuse (12) in die Lufttrocknerpatrone (14) strömende Luft reinigt,
- die Filtereinrichtung (16) einen dem Ventilgehäuse (12) zugewandten Vorfilterbereich (18) von einem der Lufttrocknerpatrone (14) zugewandten Nachfilterbereich (20), in dem sich von der Filtereinrichtung (16) erfasste Fremdpartikel sammeln, trennt und
- parallel zu der Filtereinrichtung (16) ein Rückschlagventil (22) vorgesehen ist, das eine Luftströmung von dem Vorfilterbereich (18) in den Nachfilterbereich (20) unterbindet und eine Luftströmung von dem Nachfilterbereich (20) in den Vorfilterbereich (18) zulässt,
dass das Rückschlagventil (22) in dem Ventilgehäuse (12) angeordnet ist,
dass der Nachfilterbereich (20) einen Sammelkanal (24) für von der Filtereinrichtung (16) erfasste Fremdpartikel aufweist, wobei mindestens ein Abschnitt des Sammelkanals (24) im eingebauten ungeneigten Zustand der Druckluftversorgungseinrichtung (10) eine horizontale Ebene definiert, und wobei das Rückschlagventil (22) unterhalb der Ebene liegt, sodass zumindest bei waagerecht stehendem Nutzfahrzeug eine vollständige Entleerung des Sammelkanals (24) über das Rückschlagventil (22) erfolgen kann.

2. Druckluftversorgungseinrichtung nach Anspruch 1, **dadurch gekennzeichnet, dass** das Rückschlagventil (22) bei einer Neigung der Druckluftversorgungseinrichtung (10) von bis zu 15 Grad bezüglich der horizontalen Ebene um eine beliebige Achse auf einer niedrigeren Vertikalkoordinate liegt als der niedrigste Punkt des mindestens einen die horizontale Ebene definierenden Abschnittes des Sammelkanals (24).

3. Druckluftversorgungseinrichtung nach Anspruch 1 oder 2, **dadurch gekennzeichnet, dass** die Lufttrocknerpatrone (14) ein eine Trockenmittelbox (26) aufnehmendes Patronengehäuse (28) aufweist und dass das Patronengehäuse mit dem Ventilgehäuse (12) direkt über eine Dichtung (30) verbunden ist.

## Claims

1. Compressed air supply device (10) for a commercial vehicle, comprising a valve housing (12) and a replaceable air drier cartridge (14), wherein
- the air drier cartridge (14) comprises a filter device (16), which purifies the air flowing from the valve housing (12) into the air drier cartridge (14),
- the filter device (16) separates a pre-filtration region (18) facing the valve housing (12) from a post-filtration region (20), where foreign particles caught by the filter device (16) collect, and
- parallel to the filter device (16), a non-return valve (22) is provided, which prevents an air flow from the pre-filtration region (18) into the post-filtration region (20) and permits an air flow from the post-filtration region (20) into the pre-filtration region (18),
**characterised in that**
the non-return valve (22) is located in the valve housing (12), and
the post-filtration region (20) comprises a collector (24) for foreign particles caught by the filter device (16), wherein at least a section of the collector (24) defines a horizontal plane in the installed, non-inclined state of the compressed air supply device (10), and wherein the non-return valve (22) is located below the plane, so that the collector (24) can be emptied completely via the non-return valve (22) at least in the horizontal position of the commercial vehicle.

2. Compressed air supply device according to claim 1, **characterised in that** the non-return valve (22) lies on a lower vertical coordinate than the lowest point of the at least one section of the collector (24) which defines the horizontal plane, if the compressed air supply device (10) is inclined by up to 15 degrees about any axis relative to the horizontal plane.

3. Compressed air supply device according to claim 1 or 2, **characterised in that** the air drier cartridge (14) comprises a cartridge housing (28) accommodating a desiccant box (26), and **in that** the cartridge housing (28) is directly connected to the valve housing (12) via a seal (30).

## Revendications

1. Dispositif (10) d'alimentation en air comprimé pour un véhicule utilitaire, comprenant un corps (12) de soupape et une cartouche (14) de déshydrateur d'air remplaçable, dans lequel
- la cartouche (14) du déshydrateur d'air a un dispositif (16) de filtration, qui épure de l'air s'écoulant du corps (12) de la vanne à la cartouche (14) du déshydrateur d'air,
- le dispositif (16) de filtration sépare une partie (18) de préfiltration tournée vers le corps (12) de la soupape d'une partie (20) de post-filtration, qui est tournée vers la cartouche (14) du déshydrateur d'air et dans laquelle s'accumulent des particules étrangères prises par le dispositif (16) de filtration et
- il est prévu parallèlement au dispositif (16) de filtration un clapet (22) antiretour, qui interdit un écoulement de l'air de la partie (18) de préfiltration à la partie (20) de post-filtration et autorise un écoulement de l'air de la partie (20) de post-filtration à la partie (18) de préfiltration,
**caractérisé**
**en ce que** le clapet (22) antiretour est monté dans le corps (12) de la soupape,
**en ce que** la partie (20) de post-filtration a un canal (24) collecteur de particules étrangères prises par le dispositif (16) de filtration, au moins une partie du canal (24) collecteur définissant, à l'état monté non incliné du dispositif (10) d'alimentation en air comprimé, un plan horizontal, et dans lequel le clapet (22) antiretour est en dessous du plan de manière à pouvoir, au moins lorsque le véhicule utilitaire est horizontal, vider complètement le canal (24) collecteur par l'intermédiaire du clapet (22) antiretour.

2. Dispositif d'alimentation en air comprimé suivant la revendication 1, **caractérisé en ce que** le clapet (22) antiretour se trouve, lorsque le dispositif (10) d'alimentation en air comprimé est incliné de jusqu'à 15 degrés par rapport au plan horizontal autour d'un axe quelconque, sur une coordonnée verticale plus basse que le point le plus bas de la au moins une partie du canal (24) collecteur définissant le plan horizontal.

3. Dispositif d'alimentation en air comprimé suivant la revendication 1 ou 2, **caractérisé en ce que** la cartouche (14) du déshydrateur d'air a une enveloppe (28) de cartouche recevant une boîte (26) d'agent dessicateur et **en ce que** l'enveloppe de la cartouche est reliée au corps (12) de la soupape directement par l'intermédiaire d'une étanchéité (30).
